(19) Europäisches Patentamt
European Patent Office
Office européen des brevets

(11) **EP 4 738 471 A1**

(12) **EUROPEAN PATENT APPLICATION**
published in accordance with Art. 153(4) EPC

(43) Date of publication:
**06.05.2026 Bulletin 2026/19**

(21) Application number: **23942982.2**

(22) Date of filing: **30.06.2023**

(51) International Patent Classification (IPC):
**H01M 4/583** (2010.01)

(52) Cooperative Patent Classification (CPC):
Y02E 60/10

(86) International application number:
**PCT/CN2023/104976**

(87) International publication number:
**WO 2025/000481 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited Ningde, Fujian 352100 (CN)**

(72) Inventors:
• **CHEN, Yusheng**
  **Ningde, Fujian 352100 (CN)**
• **DONG, Jiali**
  **Ningde, Fujian 352100 (CN)**

(74) Representative: **Kraus & Lederer PartGmbB Thomas-Wimmer-Ring 15 80539 München (DE)**

(54) **NEGATIVE ELECTRODE MATERIAL AND NEGATIVE ELECTRODE USING SAME, ELECTROCHEMICAL DEVICE, AND ELECTRONIC DEVICE**

(57)    This application relates to a negative electrode material, a negative electrode using the material, an electrochemical apparatus, and an electronic apparatus. Specifically, this application provides a negative electrode material, including graphite, where the negative electrode material has an I-order lithium intercalation plateau potential P1 of 30 mV to 75 mV and an II-order lithium intercalation plateau potential P2 of 90 mV to 110 mV The use of the negative electrode material of this application can significantly improve the cycling performance of the electrochemical apparatus using the negative electrode material under high voltage and high temperature, enhance the gram capacity of the negative electrode material, while maintaining the initial efficiency of the negative electrode material.

FIG. 1

# EP 4 738 471 A1

## Description

### TECHNICAL FIELD

This application relates to the field of energy storage, and specifically, to a negative electrode material, a negative electrode using the negative electrode material, an electrochemical apparatus, and an electronic apparatus.

### BACKGROUND

With the widespread application of electrochemical apparatuses (for example, lithium-ion batteries) in electronic products such as mobile phones, laptop computers, tablet computers, Bluetooth headsets, and wearable watches, the performance requirements for these apparatuses are increasingly stringent. The cycle life and energy density of lithium batteries are most critical performance indicators, significantly effecting the service life and usage duration of electronic products. Increasing voltage helps to improve energy density, but under high-voltage systems, the cycling performance of lithium-ion batteries, particularly at high temperatures, tends to deteriorate.

In view of this, it is indeed necessary to provide an improved negative electrode material that offers enhanced gram capacity, significantly improves the cycling performance of electrochemical apparatuses under high temperature and high voltage, while maintaining the initial efficiency of the negative electrode material.

### SUMMARY

This application provides a negative electrode material in an attempt to solve at least one problem existing in the related art to at least some extent.

According to a first aspect of this application, this application provides a negative electrode material, including graphite, where the negative electrode material has an I-order lithium intercalation plateau potential P1 of 30 mV to 75 mV, and an II-order lithium intercalation plateau potential P2 of 90 mV to 110 mV.

According to an embodiment of this application, the I-order lithium intercalation plateau potential P1 of the negative electrode material is 30 mV to 60 mV, and the II-order lithium intercalation plateau potential P2 is 90 mV to 100 mV.

According to an embodiment of this application, a specific surface area of the negative electrode material is S $m^2/g$, where S ranges from 2 to 8.

According to an embodiment of this application, S ranges from 4 to 7.

According to an embodiment of this application, the negative electrode material includes pores with a pore size of not greater than 5 nm, a specific surface area of the pores is S1 $m^2/g$, and a ratio of S1 to S ranges from 0.05 to 0.3.

According to an embodiment of this application, the ratio of S1 to S ranges from 0.15 to 0.3.

According to an embodiment of this application, S1 ranges from 0.1 to 1.5.

According to an embodiment of this application, in a Raman testing, a peak intensity of the negative electrode material at 1350 $cm^{-1}$ is D, a peak intensity of the negative electrode material at 1580 $cm^{-1}$ is G, a ratio of D to G is R, and $0.025 \leq R/S \leq 0.25$.

According to an embodiment of this application, $0.05 \leq R/S \leq 0.15$.

According to an embodiment of this application, $0.1 \leq R \leq 0.7$.

According to an embodiment of this application, $0.2 \leq R \leq 0.55$.

According to an embodiment of this application, a thermogravimetric decomposition temperature of the negative electrode material ranges from 650°C to 850°C.

According to an embodiment of this application, a powder compacted density of the negative electrode material is 1.90 $g/cm^3$ to 2.10 $g/cm^3$, and a powder rebound rate is 15% to 35%.

According to another aspect of this application, this application provides a negative electrode, including the negative electrode material of this application, a dispersant, and a binder.

According to an embodiment of this application, a porosity of the negative electrode is 17% to 35%.

According to another aspect of this application, this application provides an electrochemical apparatus, including a positive electrode, a separator, an electrolyte, and the negative electrode according to this application.

According to another aspect of this application, an electronic apparatus is provided, including the electrochemical apparatus according to this application.

This application, by lowering a positive electrode potential to protect the stability of a positive electrode structure in a high-voltage system, enhances the gram capacity of the negative electrode material, improves the cycling performance of the electrochemical apparatus under high temperature and high voltage, while maintaining the initial efficiency of the negative electrode material.

Additional aspects and advantages of this application are partially described and presented in subsequent descriptions, or explained by implementation of some embodiments of this application.

## BRIEF DESCRIPTION OF THE DRAWINGS

To describe embodiments of this application, the following briefly describes the accompanying drawings required for describing some embodiments of this application or the prior art. Apparently, the accompanying drawings described below are merely some embodiments of this application. Persons skilled in the art can still derive drawings of other embodiments from structures shown in these accompanying drawings without creative efforts.

FIG. 1 shows the discharge curves of Example 5 and Comparative Example 1 of this application.
FIG. 2 shows the cycle life curves at 45°C of Example 10 and Comparative Example 1 according to this application.

## DETAILED DESCRIPTION

Some embodiments of this application are described in detail below. Some embodiments of this application should not be construed as limitations on this application.

In specific embodiments and claims, a list of items connected by the term "at least one of" may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (exclusive of C), A and C (exclusive of B), B and C (exclusive of A), or all of A, B, and C. The item A may include a single element or a plurality of elements. The item B may include a single element or a plurality of elements. The item C may include a single element or a plurality of elements.

Electrochemical apparatuses (for example, lithium-ion batteries) have been widely used in various fields due to the superior performance thereof. People have increasingly higher requirements for the performance, such as energy density, high-temperature cycling performance, service life, charging speed, and the like. To improve the energy density of lithium-ion batteries, the voltage systems of lithium-ion batteries are continuously increasing. However, under high-voltage systems, a positive electrode is subjected to high potential for extended periods, making it difficult to maintain high structural stability, thereby shortening the high-temperature cycle life of lithium-ion batteries.

This application addresses the above problem by lowering a positive electrode potential. An open-circuit voltage of an electrochemical apparatus equals the positive electrode potential minus a negative electrode potential. In this application, surface modification is performed on a negative electrode material so that the negative electrode material has a defect, thereby introducing a defective lithium intercalation mechanism, resulting in changes to an I-order lithium intercalation plateau potential and an II-order lithium intercalation plateau potential of the negative electrode material. During an interlayer lithium intercalation process of the negative electrode material, as the degree of lithium intercalation increases, phase transitions occur at different potentials, with each phase transition corresponding to a lithium intercalation plateau. The phase transition process forming $LiCl_2$ corresponds to an II-order lithium intercalation plateau, while the phase transition process forming $LiC_6$ corresponds to an I-order lithium intercalation plateau. When the negative electrode material has a microporous defect structure, the lithium intercalation mechanism changes from interlayer lithium intercalation to a combined mechanism of interlayer lithium intercalation and micropore defect adsorption lithium storage. Therefore, the lithium intercalation plateau potential corresponding to interlayer lithium intercalation also changes, that is, the plateau potential decreases, with the degree of potential change related to the content and proportion of micropore defects. Defect-induced lithium intercalation can lower the lithium intercalation potential of a negative electrode, thereby lowering the positive electrode potential. Therefore, this protects the stability of a positive electrode structure under high-voltage systems, thus improving the cycling performance of the electrochemical apparatus under high temperature and high voltage. Simultaneously, defect-induced lithium intercalation can enhance the gram capacity of the negative electrode material while maintaining the initial efficiency of the negative electrode material.

Specifically, this application provides a negative electrode material, including graphite, where the negative electrode material has an I-order lithium intercalation plateau potential P1 of 30 mV to 75 mV and an II-order lithium intercalation plateau potential P2 of 90 mV to 110 mV. When P1 is greater than 75 mV and P2 is greater than 115 mV, a lithium intercalation potential of a negative electrode is too high, failing to achieve the effect of lowering a positive electrode potential and improving the high-temperature cycle life of the electrochemical apparatus. When P1 is less than 30 mV and P2 is less than 90 mV, the negative electrode has an excessively low potential when approaching full intercalation, close to the nucleation potential of lithium, which can easily induce lithium dendrite formation, resulting in safety hazards in the electrochemical apparatus. When P1 is 30 mV to 75 mV and P2 is 90 mV to 110 mV, the gram capacity of the negative electrode material can be enhanced, the cycling performance of the electrochemical apparatus under high temperature and high voltage can also be significantly improved, and the initial efficiency of the negative electrode material can be maintained.

In some embodiments, P1 is 30 mV to 60 mV, which can further improve the cycling performance of the electrochemical apparatus under high temperature and high voltage.

In some embodiments, P2 is 90 mV to 100 mV, which can further improve the cycling performance of the electrochemical apparatus under high temperature and high voltage.

In some embodiments, a terminal delithiation potential slope S0 of the negative electrode material is 2 mAh/g/V to 8 mAh/g/V. In some embodiments, S0 is 2 mAh/g/V to 5 mAh/g/V. Introducing a defect-induced lithium intercalation mechanism increases the terminal delithiation potential slope. The terminal delithiation potential slope can be calculated from a lithium intercalation curve obtained by plotting the discharge gram capacity and voltage of the negative electrode material. The terminal delithiation potential slope of the negative electrode material reflects the initial efficiency of the negative electrode material. The negative electrode material of this application can maintain a terminal delithiation potential slope comparable to that of non-surface-defect-modified graphite under high-voltage systems. Therefore, the negative electrode material can maintain a high initial efficiency.

In some embodiments, a specific surface area of the negative electrode material is S $m^2/g$, where S ranges from 2 to 8. In some embodiments, S ranges from 4 to 7. In some embodiments, S ranges from 5 to 6. In some embodiments, the specific surface area S $m^2/g$ of the negative electrode material is 2 $m^2/g$, 3 $m^2/g$, 4 $m^2/g$, 5 $m^2/g$, 6 $m^2/g$, 7 $m^2/g$, 8 $m^2/g$, or any value within a range defined by any two of these values. Introducing defects on a surface of the negative electrode material forms a porous structure, thereby increasing the specific surface area of the negative electrode material. When the specific surface area S $m^2/g$ of the negative electrode material is within the above range, the negative electrode exhibits low-potential defect-induced lithium intercalation characteristics, which can improve the gram capacity of the negative electrode material and the cycling performance of the electrochemical apparatus under high temperature and high voltage. Additionally, a reaction area between the surface of the negative electrode and an electrolyte is appropriate, preventing excessive side reactions from occurring and excessive consumption of the electrolyte, thereby maintaining the initial efficiency of the negative electrode material.

In some embodiments, the negative electrode material includes pores with a pore size of not greater than 5 nm, a specific surface area of the pores is S1 $m^2/g$, and a ratio of S1 to S ranges from 0.05 to 0.3. In some embodiments, the ratio of S1 to S ranges from 0.15 to 0.3. In some embodiments, the ratio of S1 to S ranges from 0.2 to 0.25. In some embodiments, the ratio of S1 to S is 0.05, 0.1, 0.15, 0.2, 0.25, 0.3, or any value within a range defined by any two of these values. The specific surface area of pores with a pore size of not greater than 5 nm refers to the sum of the specific surface areas of each pore with a pore size not greater than 5 nm. Pores with a pore size not greater than 5 nm can provide storage space for lithium ions, thereby enhancing the gram capacity of the negative electrode material and the cycling performance of the electrochemical apparatus under high temperature and high voltage, while maintaining the initial efficiency of the negative electrode material.

In some embodiments, S1 ranges from 0.1 to 1.5, which can further enhance the gram capacity of the negative electrode material. In some embodiments, S1 ranges from 0.5 to 1.2. In some embodiments, S1 $m^2/g$ is 0.8 $m^2/g$ to 1 $m^2/g$. In some embodiments, S1 $m^2/g$ is 0.1 $m^2/g$, 0.3 $m^2/g$, 0.5 $m^2/g$, 0.8 $m^2/g$, 1.0 $m^2/g$, 1.2 $m^2/g$, 1.5 $m^2/g$, or any value within a range defined by any two of these values.

In some embodiments, in a Raman testing, a peak intensity of the negative electrode material at 1350 $cm^{-1}$ is D, a peak intensity of the negative electrode material at 1580 $cm^{-1}$ is G, and a ratio of D to G is R, where $0.025 \leq R/S \leq 0.25$. In some embodiments, $0.05 \leq R/S \leq 0.15$. In some embodiments, $0.08 \leq R/S \leq 0.1$. In some embodiments, R/S is 0.025, 0.05, 0.08, 0.1, 0.15, 0.2, 0.25, or any value within a range defined by any two of these values. The ratio R of the D peak to the G peak in a Raman spectrum indicates the degree of surface defects of the material. The ratio R/S of the R value to the specific surface area S value indicates the proportion of defects per unit specific surface area. When R/S is within the above range, the negative electrode material has an appropriate defect level per unit specific surface area. The negative electrode exhibits low-potential defect-induced lithium intercalation characteristics while avoiding excessive consumption of the electrolyte, thereby improving the gram capacity of the negative electrode material and the cycling performance of the electrochemical apparatus under high temperature and high voltage, while maintaining the initial efficiency of the negative electrode material.

In some embodiments, $0.1 \leq R \leq 0.7$. In some embodiments, $0.2 \leq R \leq 0.55$. In some embodiments, $0.2 \leq R \leq 0.4$. In some embodiments, R is 0.1, 0.2, 0.3, 0.4, 0.5, 0.6, 0.7, or any value within a range defined by any two of these values. Introducing defects on a surface of the graphite material increases the ratio R of the D peak to the G peak in the Raman spectrum. When R is within the above range, the negative electrode material exhibits low-potential defect-induced lithium intercalation characteristics, thereby improving the cycling performance of the electrochemical apparatus under high temperature and high voltage, and preventing excessive side reactions from occurring and excessive consumption of the electrolyte, thus maintaining the gram capacity, initial efficiency of the negative electrode material, cycling performance and safety performance such as thermal shock of the electrochemical apparatus under high temperature and high voltage.

In some embodiments, a thermogravimetric decomposition temperature of the negative electrode material ranges from 650°C to 850°C. Introducing defects on the surface of the negative electrode material increases surface reactivity, leading to the decomposition of the negative electrode material at a lower temperature. The thermogravimetric decomposition temperature of the negative electrode material reflects the extent of surface defects. When the thermogravimetric decomposition temperature of the negative electrode material is within the above range, the surface defects of the negative electrode material are appropriate, the surface has appropriate reactivity, preventing excessive side reactions from increasing and excessive consumption of the electrolyte, thereby improving the gram capacity of the negative electrode material and the cycling performance of the electrochemical apparatus under high temperature and high voltage, while maintaining the initial efficiency of the negative electrode material.

In some embodiments, a powder compacted density of the negative electrode material is 1.90 g/cm$^3$ to 2.10 g/cm$^3$, and a powder rebound rate is 15% to 35%. In some embodiments, the powder compacted density of the negative electrode material is 1.90 g/cm$^3$ to 2.00 g/cm$^3$, and the powder rebound rate is 20% to 25%. When the negative electrode material is compacted under a certain pressure, and powder rebound occurs after the pressure is released. When the negative electrode material has the above high powder compacted density, the powder rebound rate thereof is low, which is conducive to maintaining a high compacted density of the negative electrode after being formed into an electrode plate, thereby improving a volumetric energy density of the electrochemical apparatus without drastically reducing the internal pores of the electrode plate, which would otherwise reduce the electrolyte retention, thus maintaining the cycling performance of the electrochemical apparatus under high temperature and high voltage.

In some embodiments, through button cell testing, the gram capacity of the negative electrode is greater than or equal to 360 mAh/g.

In some embodiments, the initial efficiency of the negative electrode material of this application is 94% to 95%.

This application also provides a negative electrode, including the negative electrode material according to this application, a dispersant, and a binder.

In some embodiments, a porosity of the negative electrode is 17% to 35%. In some embodiments, the porosity of the negative electrode is 20% to 30%. In some embodiments, the porosity of the negative electrode is 25% to 30%. In some embodiments, the porosity of the negative electrode is 17%, 20%, 22%, 25%, 28%, 30%, 32%, 35%, or any value within a range defined by any two of these values. When the porosity of the negative electrode is within the above range, the cycling performance of the electrochemical apparatus under high temperature and high voltage can be improved.

In some embodiments, the negative electrode binder includes at least one of styrene-butadiene rubber, polyacrylic acid, polyacrylate salt, polyimide, polyamideimide, polyvinylidene fluoride, polyvinylidene fluoride, polytetrafluoroethylene, water-based acrylic resin, poly(vinyl formal), or styrene-acrylic copolymer resin.

In some embodiments, any conductive material can be used as the negative electrode conductive material, provided that the negative electrode conductive material does not cause a chemical change. In some embodiments, the negative electrode conductive material includes at least one of conductive carbon black, acetylene black, carbon nanotubes, Ketjen black, conductive graphite, or graphene.

In some embodiments, the negative electrode includes a negative electrode current collector, and the negative electrode current collector may be copper foil, nickel foil, stainless steel foil, titanium foil, nickel foam, copper foam, a polymer substrate coated with conductive metal, or a combination thereof.

This application also provides an electrochemical apparatus, including a positive electrode, a separator, an electrolyte, and the negative electrode according to this application.

In some embodiments, the positive electrode includes a positive electrode active material layer and a positive electrode current collector.

In some embodiments, the positive electrode active material layer includes a positive electrode active material, a positive electrode binder, and a positive electrode conductive agent.

In some embodiments, the positive electrode active material may include at least one of lithium cobalt oxide, lithium nickel manganese cobalt oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganate, or lithium titanate.

In some embodiments, the positive electrode binder may include a binder polymer, such as, but not limited to, at least one of polyvinylidene fluoride, polytetrafluoroethylene, polyolefins, sodium carboxymethyl cellulose, lithium carboxymethyl cellulose, modified polyvinylidene fluoride, modified SBR rubber, or polyurethane.

In some embodiments, any conductive material can be used as the positive electrode conductive agent, provided that the positive electrode conductive agent does not cause a chemical change. Examples of the positive electrode conductive agent include, but are not limited to, carbon-based materials such as natural graphite, artificial graphite, carbon black, acetylene black, Ketjen black, and carbon fiber; metal-based materials such as metal powders or fibers including copper, nickel, aluminum, or silver; conductive polymers such as polyphenylene derivatives; or any mixture thereof.

In some embodiments, the positive electrode current collector may be a metal foil current collector or a composite current collector. For example, aluminum foil may be used. The composite current collector may be formed by forming a metal material (copper, copper alloy, nickel, nickel alloy, titanium, titanium alloy, silver, silver alloy, or the like) on the polymer material matrix.

The separator used in the electrochemical apparatus according to this application is not particularly limited to any material or shape, and may be based on any technology disclosed in the prior art. In some embodiments, the separator includes a polymer, an inorganic substance, or the like formed by a material stable to the electrolyte of this application. In some embodiments, the separator may include a substrate layer and a surface treatment layer. In some embodiments, the substrate layer is a non-woven fabric, film, or composite film having a porous structure. In some embodiments, the material of the substrate layer includes at least one of polyethylene, polypropylene, polyethylene terephthalate, or polyimide. In some embodiments, the material of the substrate layer includes at least one of a polypropylene porous film, a polyethylene porous film, a polypropylene non-woven fabric, a polyethylene non-woven fabric, or a polypropylene-polyethylene-polypropylene porous composite film.

In some embodiments, the surface treatment layer is provided on at least one surface of the substrate layer, and the surface treatment layer may be a polymer layer or an inorganic layer, or a layer formed by a mixture of a polymer and an inorganic substance.

In some embodiments, the inorganic layer includes inorganic particles and a binder. The inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, barium sulfate, and the like. The binder is selected from at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, poly(ethylene alkoxide), polymethyl methacrylate, polytetrafluoroethylene, or polyhexafluoropropylene.

In some embodiments, the polymer layer includes a polymer, and the material of the polymer is selected from at least one of polyamide, polyacrylonitrile, acrylate polymer, polyacrylic acid, polyacrylate salt, polyvinylpyrrolidone, poly(ethylene alkoxide), polyvinylidene fluoride, or poly(vinylidene fluoride-hexafluoropropylene).

The electrochemical apparatus of this application also includes an electrolyte. An electrolyte that can be used in this application may be an electrolyte known in the prior art.

In some embodiments, the electrolyte includes an organic solvent, an electrolyte salt, and an additive. The organic solvent of the electrolyte according to this application may be any organic solvent known in the prior art that can be used as a solvent of the electrolyte. The electrolyte used in the electrolyte according to this application is not limited, and may be any electrolyte known in the prior art. The additive of the electrolyte according to this application may be any additive known in the prior art that can be used as an additive of the electrolyte. In some embodiments, the organic solvent includes, but is not limited to, ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether-based solvent, for example, including at least one of 1,3-dioxolane (DOL) or dimethoxyethane (DME). In some embodiments, the electrolyte salt may be a lithium salt, a sodium salt, or the like. In some embodiments, the lithium salt includes at least one of an organic lithium salt or an inorganic lithium salt. In some embodiments, the lithium salt includes, but is not limited to, lithium hexafluorophosphate ($LiPF_6$), lithium tetrafluoroborate ($LiBF_4$), lithium difluorophosphate ($LiPO_2F_2$), lithium bis(trifluoromethanesulfonyl)imide $LiN(CF_3SO_2)_2$ (LiTFSI), lithium bis(fluorosulfonyl)imide $Li(N(SO_2F)_2)$ (LiFSI), lithium bis(oxalato)borate $LiB(C_2O_4)_2$ (LiBOB), or lithium difluoro(oxalato) borate $LiBF_2(C_2O_4)$ (LiDFOB). In some embodiments, the sodium salt includes, but is not limited to, at least one of $NaClO_4$, $NaPF_6$, $NaBF_4$, $Na(FSO_2)_2N$, $Na(CF_3SO_2)_2N$, $Na(C_2F_5SO_2)_2N$, $NaCF_3SO_3$, $NaSbF_6$, $NaBC_4O_8$, NaFSI, NaTFSI, sodium salts of lower aliphatic carboxylic acids, $NaAlCl_4$, $NaPO_2F_2$, or $Na_2PO_3F$.

In some embodiments, the electrochemical apparatus of this application includes, but is not limited to, all types of primary batteries, secondary batteries, or capacitors. In some embodiments, the electrochemical apparatus is a lithium secondary battery. In some embodiments, the lithium secondary battery includes, but is not limited to, a lithium metal secondary battery, a lithium-ion secondary battery, a lithium polymer secondary battery, or a lithium-ion polymer secondary battery. In some embodiments, the electrochemical apparatus is a sodium-ion battery.

This application further provides an electronic apparatus, including the electrochemical apparatus according to this application.

The electronic device or apparatus of this application is not particularly limited. In some embodiments, the electronic device of this application includes, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

The preparation processes of electrochemical apparatuses and electronic apparatuses are well known to persons skilled in the art, and are not particularly limited in this application. For example, a battery may be prepared by the following method: a positive electrode plate and a negative electrode plate are stacked with a separator therebetween, and the resulting stack is formed into a bare cell after subjected to operations such as winding and folding as needed. Stainless steel is selected as a packaging shell, and the bare cell is placed inside the packaging shell. An aluminum tab of the bare cell and a terminal post in a sealing assembly are laser-welded together to achieve electrical conduction between the terminal post and the bare cell. A steel shell cover and a housing are connected by laser welding to achieve battery sealing.

A through-hole is provided on a surface of the steel shell, the electrolyte is injected into a cell through the through-hole. After sufficient infiltration, the cell is activated under certain current and voltage conditions, completing the preparation process of the battery.

The following describes preparation of lithium-ion battery by using a lithium-ion battery as an example and with reference to specific examples. Persons skilled in the art understand that the preparation method described in this application is only an example, and that all other suitable preparation methods fall within the scope of this application.

## Examples

The following describes performance evaluation performed based on examples and comparative examples of the lithium-ion battery of this application.

**I. Preparation of lithium-ion battery**

1. Preparation of negative electrode material

An artificial graphite was used as a raw material and placed in an atmosphere furnace. A mixed gas of water vapor/air was introduced with a flow rate of F. A three-stage constant-temperature reaction was performed under this atmosphere: the first stage involved reacting at temperature T1 for H1 hours, the second stage involved reacting at temperature T2 for H2 hours, and the third stage involved reacting at temperature T3 for H3 hours. After completion of the reaction, the material was naturally cooled to room temperature to obtain a negative electrode material. The reaction conditions for each example and comparative example were shown in the table below, where the material in Comparative Example 1 was unreacted graphite:

| Example/Comparative Example | T1 (°C) | H1 (hours) | T2 (°C) | H2 (hours) | T3 (°C) | H3 (hours) | F (L/min) |
|---|---|---|---|---|---|---|---|
| Example 1 | 300 | 2 | 500 | 2 | 700 | 2 | 3 |
| Example 2 | 325 | 2 | 525 | 2 | 725 | 2 | 3 |
| Example 3 | 350 | 2 | 550 | 2 | 750 | 2 | 3 |
| Example 4 | 375 | 2 | 575 | 2 | 775 | 2 | 3 |
| Example 5 | 400 | 2 | 600 | 2 | 800 | 2 | 3 |
| Example 6 | 425 | 2 | 625 | 2 | 825 | 2 | 3 |
| Example 7 | 450 | 2 | 650 | 2 | 850 | 2 | 3 |
| Example 8 | 475 | 2 | 675 | 2 | 875 | 2 | 3 |
| Example 9 | 500 | 2 | 700 | 2 | 900 | 2 | 3 |
| Example 10 | 525 | 2 | 725 | 2 | 925 | 2 | 3 |
| Example 11 | 500 | 3 | 700 | 3 | 900 | 3 | 3 |
| Example 12 | 500 | 3 | 700 | 3 | 900 | 5 | 3 |
| Example 13 | 500 | 2 | 700 | 3 | 900 | 5 | 3 |
| Example 14 | 500 | 2 | 700 | 3 | 900 | 4 | 3 |
| Example 15 | 500 | 4 | 700 | 4 | 900 | 4 | 3 |
| Example 16 | 500 | 5 | 700 | 5 | 900 | 5 | 3 |
| Example 17 | 500 | 5 | 700 | 6 | 900 | 7 | 3 |
| Example 18 | 500 | 3 | 700 | 3 | 900 | 5 | 3 |
| Example 19 | 500 | 3 | 700 | 3 | 900 | 6 | 3 |
| Example 20 | 500 | 3 | 700 | 3 | 900 | 7 | 3 |
| Example 21 | 500 | 2 | 700 | 2 | 900 | 8 | 3 |
| Example 22 | 500 | 1 | 700 | 1 | 900 | 9 | 3 |
| Example 23 | 500 | 2 | 700 | 2 | 900 | 8 | 3.5 |

(continued)

| Example/Comparative Example | T1 (°C) | H1 (hours) | T2 (°C) | H2 (hours) | T3 (°C) | H3 (hours) | F (L/min) |
|---|---|---|---|---|---|---|---|
| Example 24 | 500 | 2 | 700 | 2 | 900 | 8 | 4 |
| Example 25 | 500 | 2 | 700 | 2 | 900 | 8 | 4.5 |
| Example 26 | 500 | 2 | 700 | 2 | 900 | 8 | 5 |
| Example 27 | 500 | 2 | 700 | 2 | 900 | 8 | 5.5 |
| Example 28 | 500 | 2 | 700 | 2 | 900 | 8 | 6 |
| Comparative Example 1 | / | / | / | / | / | / | / |
| Comparative Example 2 | 600 | 2 | 800 | 2 | 1000 | 2 | 3 |

2. Preparation of negative electrode

The negative electrode material, sodium carboxymethyl cellulose (CMC), and styrene-butadiene rubber (SBR) were dispersed uniformly in an appropriate amount of deionized water at a mass ratio of 97.5:1.2:1.3 to obtain a negative electrode slurry. A copper foil was used as a current collector, the negative electrode slurry was uniformly applied onto the current collector, followed by drying and cold pressing, to obtain a negative electrode.

3. Preparation of positive electrode

Lithium cobalt oxide (chemical formula: $LiCoO_2$) was used as a positive electrode active material. The positive electrode active material, a conductive agent acetylene black, and a binder polyvinylidene fluoride (PVDF for short) were fully stirred and mixed at a weight ratio of 96.3:2.2:1.5 in an appropriate amount of N-methylpyrrolidone (NMP for short) solvent to form a uniform positive electrode slurry. The positive electrode slurry was applied onto a current collector aluminum foil, followed by drying and cold pressing, to obtain a positive electrode.

4. Preparation of electrolyte

In a dry argon atmosphere glove box, ethylene carbonate (EC), propylene carbonate (PC), ethyl methyl carbonate (EMC), and diethyl carbonate (DEC) were mixed at a mass ratio of EC:PC:EMC:DEC=1:3:3:3. Then fluoroethylene carbonate and 1,3-propanesultone were added and dissolved, the mixture was fully stirred, and then lithium salt $LiPF_6$ was added and evenly mixed to obtain an electrolyte. A mass percentage of $LiPF_6$ was 12.5%, a mass percentage of fluoroethylene carbonate was 2%, and a mass percentage of 1,3-propanesultone was 2%, with the mass percentages calculated based on the mass of the electrolyte.

5. Preparation of separator

A polyethylene porous polymer film was used as a separator.

6. Preparation of lithium-ion battery

The positive electrode, the separator, and the negative electrode were sequentially stacked so that the separator was located between the positive electrode and negative electrode for separation. Then, the resulting stack was wound to form an electrode assembly. After tabs were welded, the electrode assembly was placed in an outer packaging aluminum-plastic foil film, and the prepared electrolyte was injected into the dried electrode assembly, followed by processes such as vacuum packaging, standing, formation, shaping, and capacity testing, to obtain a pouch lithium-ion battery.

**II. Testing methods**

1. Testing of negative electrode material

A fully discharged lithium-ion battery was disassembled, and the negative electrode was taken out, soaked in dimethyl carbonate (DMC) for 20 minutes, and sequentially eluted by DMC and acetone so that the electrolyte and surface SEI film were removed, and then dried in an oven at 80°C for 12 hours to obtain a treated negative electrode. Then powder on the negative electrode was scraped off with a spatula and calcined at 500°C in an air atmosphere for 3 hours to remove CMC and SBR from the powder, to obtain a negative electrode material. The obtained negative electrode material was subjected to the following tests:

(1) Lithium intercalation plateau potential test

The negative electrode material, SBR, CMC, and conductive carbon were fully stirred and mixed at a weight ratio of 93:2.5:2.5:2 in an appropriate amount of deionized water solvent to form a uniform negative electrode slurry. The negative electrode slurry was applied onto a current collector copper foil, followed by drying, cold pressing, and slitting, to obtain a negative electrode.

The prepared negative electrode was used as the positive electrode of a button cell, a lithium sheet, the prepared separator, the prepared electrolyte, a steel sheet, nickel foam, and a button cell housing were assembled to form a button cell, and the button cell was left standing for 6 hours. The assembled button cell was placed on a Land tester and subjected to two cycles of charge-discharge testing according to the following procedure:

1) The button cell was left standing for 5 minutes.
2) The button cell was discharged at 0.05C to 5 mV.
3) The button cell was left standing for 5 minutes.
4) The button cell was discharged at 0.05 mA to 5 mV.
5) The button cell was left standing for 5 minutes.
6) The button cell was discharged at 0.01 mA to 5 mV.
7) The button cell was left standing for 5 minutes.
8) The button cell was charged at 0.1C to 2 V.
9) The button cell was left standing for 5 minutes.

After the test was completed, a lithium intercalation curve was obtained by plotting a second-cycle discharge gram capacity and voltage, and the an I-order lithium intercalation plateau potential and an II-order lithium intercalation plateau potential of the negative electrode material can be read through the lithium intercalation curve.

(2) Terminal delithiation potential slope test

According to the method same as the "(1) Lithium intercalation plateau potential test", a delithiation curve was obtained by plotting a second-cycle charge gram capacity and voltage. The gram capacity corresponding to 2 V was recorded as Cap2, and the gram capacity corresponding to 1 V was recorded as Cap1. The terminal delithiation potential slope S0 (in mAh/g/V) was calculated using the following formula:

$$S0 = (Cap2 - Cap1) / (2 \text{ V} - 1 \text{ V}) \text{ mAh/g/V}.$$

(3) Gram capacity test

According to the method same as the "(1) Lithium intercalation plateau potential test", the gram capacity of the negative electrode material was obtained by dividing a first-cycle charge capacity corresponding to 1.0 V by the weight of the negative electrode material.

(4) Initial efficiency test

According to the method same as the "(1) Lithium intercalation plateau potential test", the initial efficiency of the negative electrode material was calculated by dividing a first-cycle charge gram capacity by the first-cycle discharge gram capacity.

(5) Specific surface area test

20 g to 30 g of the negative electrode material was weighed and compressed, and then 1.5 g to 3.5 g of the sample obtained after compression was weighed and placed in a test sample tube. The sample was degassed at 200°C for 2 hours, then high-purity nitrogen gas was introduced, allowing the sample to adsorb nitrogen at liquid nitrogen temperature and a relative pressure of $10^{-6}$ torr until adsorption saturation. An $N_2$ adsorption-desorption curve was obtained through testing software. The obtained $N_2$ adsorption-desorption curve was processed according to a BET model to obtain a specific surface area of the negative electrode material, and a pore size distribution curve was extracted according to a BJH model. An integrated area of the curve in the range of not greater than 5 nm represented the specific surface area of pores with a pore size not greater than 5 nm.

(6) Powder compacted density and powder rebound rate test

m grams of the negative electrode material were weighed and placed into a test mold with a bottom area recorded as S. The material with a pressure of 5 tons was compacted, a filling height after compaction was recorded as H1, and then a filling height after the pressure was released and the material was rebound was recorded as H2. The following formulas were used for calculation: Powder compacted density = m / (S $\times$ H1), and Powder rebound rate = (1 - H1 / H2) $\times$ 100%.

2. Cycling performance test of lithium-ion battery under high temperature and high voltage

The lithium-ion battery was subjected to charge-discharge cycle testing at 45°C according to the following procedure:

1) The lithium-ion battery was left standing for 30 minutes.
2) The lithium-ion battery was charged at 1C to 4.48 V, and constant voltage to 0.05C.
3) The lithium-ion battery was left standing for 10 hours.
4) The lithium-ion battery was discharged at 1C to 3.0 V.
5) The lithium-ion battery was left standing for 30 minutes.
6) The lithium-ion battery was cycled for 200 cycles from step 2) to step 5).
7) The lithium-ion battery was charged at 1C to 4.45 V, and constant voltage to 0.05C.
8) The lithium-ion battery was left standing for 10 hours.
9) The lithium-ion battery was discharged at 1C to 3.0 V.
10) The lithium-ion battery was left standing for 30 minutes.
11) The lithium-ion battery was cycled from step 7) to step 10) until a battery capacity retention rate decayed to 80%, and the number of cycles was recorded as the cycle life of the lithium-ion battery under high temperature and high voltage.

### III. Test results

Table 1 shows the I-order lithium intercalation plateau potential and II-order lithium intercalation plateau potential, gram capacity, initial efficiency of the negative electrode material, and the cycling performance of the lithium-ion battery under high temperature and high voltage.

**Table 1**

|  | P1 (mV) | P2 (mV) | Gram capacity (mAh/g) | Initial efficiency | Cycle life (cycles) |
|---|---|---|---|---|---|
| Example 1 | 75 | 110 | 358.2 | 95.0% | 203 |
| Example 2 | 70 | 108 | 360.2 | 94.4% | 206 |
| Example 3 | 66 | 105 | 360.8 | 94.6% | 212 |
| Example 4 | 63 | 103 | 359.9 | 94.3% | 219 |
| Example 5 | 58 | 101 | 360.5 | 94.4% | 223 |
| Example 6 | 53 | 98 | 361.4 | 94.2% | 227 |
| Example 7 | 46 | 96 | 362.2 | 94.3% | 228 |
| Example 8 | 40 | 93 | 362.8 | 94.3% | 230 |
| Example 9 | 36 | 91 | 362.4 | 94.5% | 235 |
| Example 10 | 30 | 90 | 363.0 | 94.3% | 240 |
| Comparative Example 1 | 77 | 112 | 356.9 | 94.6% | 195 |
| Comparative Example 2 | 27 | 88 | 355.3 | 92.9% | 234 |

In Comparative Example 1, the surface of the negative electrode material is not treated, resulting in higher I-order lithium intercalation plateau potential and II-order lithium intercalation plateau potential. Although the negative electrode material has high initial efficiency, the gram capacity of the negative electrode material is low, and the cycle life of the lithium-ion battery under high temperature and high voltage is short. In Comparative Example 2, after surface modification, the I-order lithium intercalation plateau potential and II-order lithium intercalation plateau potential of the negative electrode material are too low. Although the cycle life of the lithium-ion battery under high temperature and high voltage prolongs, the gram capacity and initial efficiency of the negative electrode material are low.

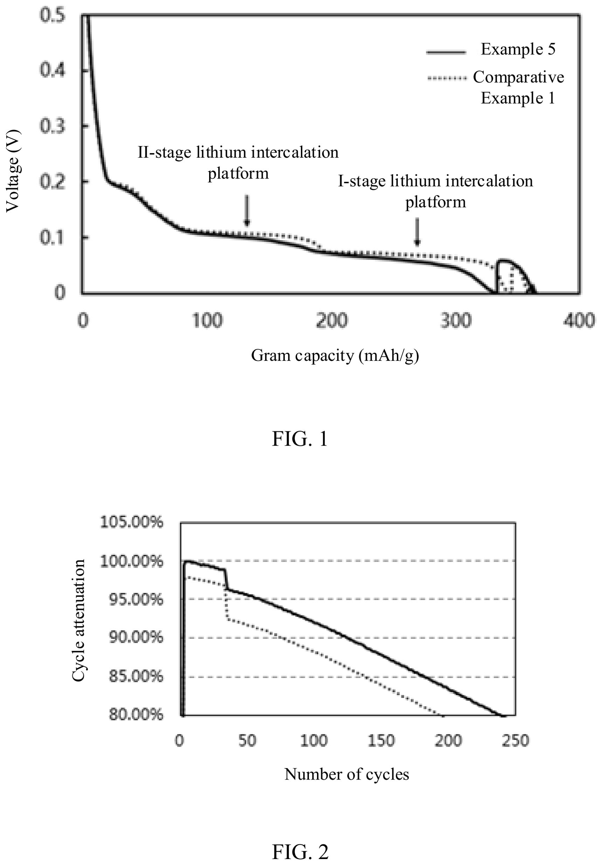

In Examples 1 to 10, after surface modification, the negative electrode material has the I-order lithium intercalation plateau potential of 30 mV to 75 mV and the II-order lithium intercalation plateau potential of 90 mV to 110 mV, and the negative electrode material exhibits significantly improved gram capacity, significantly prolonged cycle life of the lithium-ion battery under high temperature and high voltage, while maintaining high initial efficiency of the negative electrode material. FIG. 1 shows the discharge curves of Example 5 and Comparative Example 1, and the result indicates that Example 5 has lower I-order lithium intercalation plateau potential and II-order lithium intercalation plateau potential compared to Comparative Example 1.

FIG. 2 shows the cycle life curves of Example 10 and Comparative Example 1, and the result indicates that the cycle life of Example 10 is significantly prolonged compared to Comparative Example 1.

Table 2 shows the effect of the specific surface area of the negative electrode material on the gram capacity thereof, initial efficiency, and the cycling performance of the lithium-ion battery under high temperature and high voltage. Except for the parameters listed in Table 2, the remaining parameters of Examples 11 to 17 are consistent with Example 9.

**Table 2**

|  | S (m²/g) | S1 (m²/g) | S1/S | Gram capacity (mAh/g) | Initial efficiency | Cycle life (cycles) |
|---|---|---|---|---|---|---|
| Example 9 | 1.9 | 0.08 | 0.04 | 362.4 | 94.5% | 235 |
| Example 11 | 3.7 | 0.5 | 0.14 | 363.5 | 94.6% | 231 |
| Example 12 | 4 | 0.9 | 0.23 | 364.1 | 94.5% | 242 |
| Example 13 | 4.8 | 1.5 | 0.30 | 364.5 | 94.3% | 247 |
| Example 14 | 5.4 | 1.5 | 0.28 | 364.3 | 94.4% | 245 |
| Example 15 | 6.9 | 1.4 | 0.20 | 364.0 | 94.4% | 240 |
| Example 16 | 7.9 | 0.8 | 0.10 | 362.7 | 94.5% | 227 |
| Example 17 | 8.2 | 2.6 | 0.32 | 362.0 | 93.1% | 208 |

The results indicate that when the specific surface area S m²/g of the negative electrode material is 2 m²/g to 8 m²/g and/or the ratio of the specific surface area S1 of pores with a pore size not greater than 5 nm to S ranges from 0.05 to 0.3, the gram capacity of the negative electrode material can be further enhanced, the cycle life of the lithium-ion battery under high temperature and high voltage can be prolonged, and high initial efficiency of the negative electrode material can be maintained. When S m²/g is 4 m²/g to 7 m²/g and/or the ratio of S1 to S ranges from 0.15 to 0.3, a more superior effect can be achieved.

Table 3 shows the effect of the ratio R of the D peak to the G peak obtained from the Raman testing and the ratio R/S on the gram capacity, initial efficiency of the negative electrode material, and the cycling performance of the lithium-ion battery under high temperature and high voltage. Except for the parameters listed in Table 3, the remaining parameters of Examples 18 to 22 are consistent with Example 12.

**Table 3**

|  | S (m²/g) | R | R/S | Gram capacity (mAh/g) | Initial efficiency | Cycle life (cycles) |
|---|---|---|---|---|---|---|
| Example 12 | 4 | 0.09 | 0.02 | 364.0 | 94.4% | 240 |
| Example 18 | 4.5 | 0.22 | 0.05 | 365.4 | 94.4% | 248 |
| Example 19 | 5.2 | 0.44 | 0.08 | 365.7 | 94.2% | 252 |
| Example 20 | 4 | 0.55 | 0.14 | 366.2 | 94.3% | 245 |
| Example 21 | 2.8 | 0.68 | 0.24 | 362.4 | 94.1% | 221 |
| Example 22 | 2.6 | 0.73 | 0.28 | 362.0 | 93.6% | 202 |

The results indicate that when R/S ranges from 0.025 to 0.25, the gram capacity of the negative electrode material can be further enhanced, the cycle life of the lithium-ion battery under high temperature and high voltage can be prolonged, and high initial efficiency of the negative electrode material can be maintained. When R/S ranges from 0.05 to 0.15, a more superior effect can be achieved.

When R ranges from 0.1 to 0.7, the gram capacity of the negative electrode material can be further enhanced, the cycle life of the lithium-ion battery under high temperature and high voltage can be prolonged, and high initial efficiency of the negative electrode material can be maintained. When R ranges from 0.2 to 0.55, a more superior effect can be achieved.

Table 4 shows the effect of the powder compacted density, powder rebound rate of the negative electrode material, and the porosity of the negative electrode on the cycling performance of the lithium-ion battery under high temperature and high voltage. Except for the parameters listed in Table 4, the remaining parameters of Examples 23 to 29 are consistent with Example 21.

**Table 4**

| | Powder compacted density (g/cm$^3$) | Powder rebound rate | Negative electrode porosity | Cycle life (cycles) |
|---|---|---|---|---|
| Example 21 | 1.92 | 34% | 35% | 235 |
| Example 23 | 1.96 | 31% | 33% | 232 |
| Example 24 | 1.99 | 28% | 29% | 230 |
| Example 25 | 2.01 | 25% | 27% | 227 |
| Example 26 | 2.03 | 22% | 23% | 225 |
| Example 27 | 2.05 | 18% | 19% | 222 |
| Example 28 | 2.08 | 15% | 17% | 218 |
| Example 29 | 2.12 | 13% | 12% | 204 |

The results indicate that when the powder compacted density of the negative electrode material is 1.90 g/cm$^3$ to 2.10 g/cm$^3$ and the powder rebound rate is 15% to 35%, the cycle life of the lithium-ion battery under high temperature and high voltage can be further prolonged.

When the porosity of the negative electrode is 17% to 35%, the cycle life of the lithium-ion battery under high temperature and high voltage can be further prolonged.

References to "an embodiment", "some embodiments", "one embodiment", "another example", "an example", "a specific example", or "some examples" in this specification mean the inclusion of specific features, structures, materials, or characteristics described in the embodiment or example in at least one embodiment or example of this application. Therefore, descriptions in various places throughout this specification, such as "in some embodiments", "in an embodiment", "in one embodiment", "in another example", "in one example", "in a specific example", or "an example", do not necessarily refer to the same embodiment or example of this application. In addition, specific features, structures, materials, or characteristics herein may be combined in any suitable manner in one or more embodiments or examples.

Although illustrative embodiments have been demonstrated and described, persons skilled in the art should understand that the foregoing embodiments should not be construed as any limitation on this application, and that some embodiments may be changed, replaced, and modified without departing from the spirit, principle, and scope of this application.

**Claims**

1. A negative electrode material, comprising graphite, wherein an I-order lithium intercalation plateau potential P1 of the negative electrode material is 30 mV to 75 mV, and an II-order lithium intercalation plateau potential P2 is 90 mV to 110 mV.

2. The negative electrode material according to claim 1, wherein a specific surface area of the negative electrode material is S m$^2$/g, and S ranges from 2 to 8.

3. The negative electrode material according to claim 2, wherein the negative electrode material comprises pores with a pore size of not greater than 5 nm, a specific surface area of the pores is S1 m$^2$/g, and a ratio of S1 to S ranges from 0.05 to 0.3.

4. The negative electrode material according to claim 3, wherein the negative electrode material satisfies at least one of the following:

(1) S ranges from 4 to 7;
(2) S1 ranges from 0.1 to 1.5; or
(3) the ratio of S1 to S ranges from 0.15 to 0.3.

5. The negative electrode material according to claim 1, wherein the I-order lithium intercalation plateau potential P1 is 30 mV to 60 mV, and the II-order lithium intercalation plateau potential P2 is 90 mV to 100 mV.

6. The negative electrode material according to claim 2, wherein in a Raman testing, a peak intensity of the negative electrode material at 1350 cm$^{-1}$ is D, a peak intensity of the negative electrode material at 1580 cm$^{-1}$ is G, a ratio of D to G is R, and $0.025 \leq R/S \leq 0.25$.

7. The negative electrode material according to claim 6, wherein the negative electrode material satisfies at least one of the following:

(1)

$$0.1 \leq R \leq 0.7;$$

or
(2)

$$0.05 \leq R/S \leq 0.15.$$

8. The negative electrode material according to claim 6, wherein $0.2 \leq R \leq 0.55$.

9. The negative electrode material according to claim 1, wherein the negative electrode material satisfies at least one of the following:

(1) a thermogravimetric decomposition temperature of the negative electrode material ranges from 650°C to 850°C; or
(2) a powder compacted density of the negative electrode material is 1.90 g/cm$^3$ to 2.10 g/cm$^3$, and a powder rebound rate is 15% to 35%.

10. A negative electrode, comprising the negative electrode material according to any one of claims 1 to 9, a dispersant, and a binder.

11. The negative electrode according to claim 10, wherein a porosity of the negative electrode is 17% to 35%.

12. An electrochemical apparatus, comprising a positive electrode, a separator, an electrolyte, and the negative electrode according to claim 10 or 11.

13. An electronic apparatus, comprising the electrochemical apparatus according to claim 12.

FIG. 1

FIG. 2

## INTERNATIONAL SEARCH REPORT

| International application No. |
|---|
| **PCT/CN2023/104976** |

| A. | CLASSIFICATION OF SUBJECT MATTER |
|---|---|

H01M4/583(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 负极, 石墨, 电位, 比表面积, 拉曼, anode, graphite, potential, specific surface area, raman

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 1151617 A (PETOCA, LTD.) 11 June 1997 (1997-06-11) description, page 1, paragraph 4, page 5, paragraph 6 to page 6, paragraph 5, and page 13, paragraph 7 to page 14, paragraph 6, and figures 1-2 | 1, 5 |
| Y | CN 1151617 A (PETOCA, LTD.) 11 June 1997 (1997-06-11) description, page 1, paragraph 4, page 5, paragraph 6 to page 6, paragraph 5, and page 13, paragraph 7 to page 14, paragraph 6, and figures 1-2 | 2-4, 6-13 |
| Y | CN 115394999 A (NINGDE AMPEREX TECHNOLOGY LTD.) 25 November 2022 (2022-11-25) description, paragraphs 4-109 | 2-4, 6-13 |
| A | CN 115810724 A (CONTEMPORARY AMPEREX TECHNOLOGY CO., LTD.) 17 March 2023 (2023-03-17) entire document | 1-13 |
| A | US 4515709 A (CENTRAL GLASS CO., LTD.) 07 May 1985 (1985-05-07) entire document | 1-13 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 March 2024** | **07 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104976**

| Patent document cited in search report | | | Publication date (day/month/year) | Patent family member(s) | | | Publication date (day/month/year) |
|---|---|---|---|---|---|---|---|
| CN | 1151617 | A | 11 June 1997 | US | 5698341 | A | 16 December 1997 |
| | | | | TW | 326579 | B | 11 February 1998 |
| | | | | DE | 69609384 | D1 | 24 August 2000 |
| | | | | DE | 69609384 | T2 | 15 February 2001 |
| | | | | EP | 0762522 | A1 | 12 March 1997 |
| | | | | EP | 0762522 | B1 | 19 July 2000 |
| | | | | KR | 970013470 | A | 29 March 1997 |
| | | | | KR | 100273710 | B1 | 15 December 2000 |
| | | | | JP | H0963584 | A | 07 March 1997 |
| | | | | JP | H0963585 | A | 07 March 1997 |
| | | | | CN | 1091954 | C | 02 October 2002 |
| CN | 115394999 | A | 25 November 2022 | JP | 2023153876 | A | 18 October 2023 |
| CN | 115810724 | A | 17 March 2023 | WO | 2023040319 | A1 | 23 March 2023 |
| | | | | KR | 20230088766 | A | 20 June 2023 |
| | | | | EP | 4228034 | A1 | 16 August 2023 |
| | | | | JP | 2023550137 | A | 30 November 2023 |
| US | 4515709 | A | 07 May 1985 | JPS | 5950011 | A | 22 March 1984 |
| | | | | JPH | 0139965 | B2 | 24 August 1989 |
| | | | | DE | 3319111 | A1 | 15 March 1984 |
| | | | | DE | 3319111 | C2 | 09 March 1989 |
| | | | | GB | 8309299 | D0 | 11 May 1983 |
| | | | | GB | 2127798 | A | 18 April 1984 |
| | | | | GB | 2127798 | B | 08 May 1986 |
| | | | | FR | 2532929 | A1 | 16 March 1984 |
| | | | | FR | 2532929 | B1 | 15 January 1988 |

Form PCT/ISA/210 (patent family annex) (July 2022)